# EUROPEAN PATENT APPLICATION

(11) **EP 3 255 595 A1**
(43) Date of publication of application: **13.12.2017**
(21) Application number: 17174711.6
(22) Date of filing: 07.06.2017
(51) Int. Cl.: G06Q 10/08, G06Q 10/04

(54) **METHOD AND SYSTEM FOR FACILITATING VEHICLE LOADING**

(30) Priority: 07.06.2016 NL 2016902
(71) Applicant: TNT Holdings B.V., 2132 LS Hoofddorp (NL)
(72) Inventor: Reeves, Terry, 2132 LS Hoofddorp (NL); Braaksma, Jan Maarten, 2132 LS Hoofddorp (NL); Zekic, Nemanja, 2132 LS Hoofddorp (NL); Hendriks, Marco Nicolaas Bernardus Maria, 2132 LS Hoofddorp (NL)
(74) Representative: De Vries & Metman

(57) **Abstract**

The disclosure relates to a method of facilitating vehicle loading. The method involves assigning a plurality of packages to a vehicle, receiving a weight and a size of each of the plurality of packages, e.g. from a measurement system, determining loading position identifiers for each of the plurality of packages based on at least the received weight and the received size of each of the plurality of packages while taking into account a load distribution of the plurality of packages in the vehicle, and using an output interface to output the loading position identifiers.

## Description

### FIELD OF THE INVENTION

The invention relates to a method and system for facilitating vehicle loading.

### BACKGROUND

In the past decade, transportation of packages (letters, parcels) by specialized service providers has rapidly increased and is expected to increase further due to developments such as online shopping.

Currently, such service providers use depots strategically deployed over a service area. Packages arrive at the depot by means of trucks, hereinafter also referred to as line haul, and are further distributed to customers in the service area using PickUp and Delivery (PUD) vehicles, such as vans and trucks. Typically, the packages arrive daily at early hours at the depot and are distributed from the depot during the day. During the day, the service provider also receives requests to pick up packages. These packages are collected by the same vehicles used for delivery. Depot staff unloads line haul trucks and loads the packages into PUD vehicles for the particular delivery rounds.

A drawback of the conventional method of loading packages in vehicles is that if normally requires specialized personnel, e.g. the drivers of the vehicles. Especially when packages are loaded in trucks, they need to be loaded at suitable positions to ensure that the vehicle is stable and remains stable on the road.

### SUMMARY

The present disclosure aims to present a more dynamic, and thereby more efficient, method for facilitating vehicle loading in the absence of specialized personnel.

To that end, one aspect of the disclosure pertains to a method of facilitating vehicle loading which comprises the steps of a processor assigning a plurality of packages to a vehicle, a processor receiving a weight and a size of each of said plurality of packages, a processor determining loading position identifiers for each of said plurality of packages based on at least said received weight and said received size of each of said plurality of packages while taking into account a load distribution of said plurality of packages in said vehicle, and a processor using an output interface to output said loading position identifiers. The weight may comprise a weight distribution of a package and/or the center of gravity of the package, for example.

The inventors have recognized that by automatically determining and outputting loading position identifiers, personnel with less training and/or experience, e.g. personnel other than the driver, is able to load packages into a vehicle with the help of the outputted identifiers, and that by using the weight and size of the packages to take into account a load distribution of the packages in the vehicle, the vehicle may be loaded such that it remains stable on the road.

The step of a processor using an output interface to output said loading position identifiers may comprise said processor using said output interface to provide said output to a display and/or a printer.

The step of a processor receiving a weight and a size of each of said plurality of packages may comprise said processor receiving a weight and a size of one or more of said plurality of packages from a measurement system, said measurement system having measured said weight and said size. Since weight and size information of a package is not always provided by the customer and if it is provided by the customer, it may not be reliable, receiving the weight and size information of the packages from a measurement system, e.g. deployed at a depot or gateway, is advantageous.

The method may further comprise the step of obtaining a floor layout of said vehicle from a storage facility and the step of a processor determining loading position identifiers for each of said plurality of packages may comprise determining loading position identifiers for each of said plurality of packages based on at least said received weight and said received size of each of said plurality of packages and said floor layout of said vehicle. The floor layout may indicate, for example, the dimensions of the loading floor, the position and type of each of the wheels and/or the position of fastening means.

The step of a processor assigning a plurality of packages to a vehicle may comprise assigning a plurality of packages to a vehicle based on at least said received weight and said received size of each of said plurality of packages while taking into account a load distribution of said plurality of packages in said vehicle. A package may in certain cases either be loaded into a first or into second vehicle without changing the driving distances (much). In these cases, when taking into account the weight and size of the package and the load distribution of the packages in the two vehicles, it may be preferred to load the package in one vehicle instead of the other. For example, when a certain package has a large size and weight, but an uneven weight distribution, it may be preferable to transport the certain package together with packages that allow the center of gravity of the certain package to be located near the middle of the vehicle.

The method may further comprise the step of determining a round for said vehicle, said round comprising a sequence of scheduled delivery stops, and the step of a processor determining loading position identifiers for each of said plurality of packages may comprise said processor determining a loading position identifier for a package based on at least said received weight and said received size of said package and a scheduled position of said package in said sequence of scheduled delivery stops. When the vehicle is a delivery vehicle for delivering packages at multiple recipients, it is beneficial to make the loading position of a package dependent on the scheduled position of the package in the sequence of scheduled delivery stops so that the package can be (easily) unloaded at its delivery stop.

The sequence of delivery stops may be determined in dependence on the received weight and the received size of each of the plurality of packages while taking into account a load distribution of the plurality of packages in the vehicle. For example, the order of the sequence of delivery stops may be reversed and/or neighboring delivery stops may be swapped (possibly at the expense of a slightly longer route) if this allows a better load distribution of the vehicle.

Another aspect of the disclosure pertains to a system for facilitating vehicle loading which comprises at least one receiver, an output interface and at least one processor configured to assign a plurality of packages to a vehicle, to use said at least one receiver to receive a weight and a size of each of said plurality of packages, to determine loading position identifiers for each of said plurality of packages based on at least said received weight and said received size of each of said plurality of packages while taking into account a load distribution of said plurality of packages in said vehicle, and to use said output interface to output said loading position identifiers.

Said at least one processor may be configured to use said at least one receiver to receive a weight and a size of one or more of said plurality of packages from a measurement system, said measurement system having measured said weight and said size.

Said at least one processor may be configured to use said output interface to provide said output to a display and/or a printer.

Said at least one processor may be configured to obtain a floor layout of said vehicle from a storage facility and to determine loading position identifiers for each of said plurality of packages based on at least said received weight and said received size of each of said plurality of packages and said floor layout of said vehicle.

Said at least one processor may be configured to assign said plurality of packages to said vehicle based on at least said received weight and said received size of each of said plurality of packages while taking into account a load distribution of said plurality of packages in said vehicle.

Said at least one processor may be configured to determine a round for said vehicle, said round comprising a sequence of scheduled delivery stops, and to determine, for each of said plurality of packages, a loading position identifier for a package based on at least said received weight and said received size of said package and a scheduled position of said package in said sequence of scheduled delivery stops.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

### BRIEF DESCRIPTION OF THE DRAWINGS

Aspects of the invention will be explained in greater detail by reference to exemplary embodiments shown in the drawings, in which:
**Fig. 1** shows a schematic illustration of a depot used for pickup and delivery of packages in a service area;
**Fig. 2** is a flow diagram of an embodiment of the method of the invention;
**Fig. 3** is a block diagram of an embodiment of the system of the invention;
**Fig. 4** is a schematic illustration of a depot comprising an embodiment of the system of the invention;
**Fig. 5** depicts a first embodiment of a measurement system;
**Fig. 6** depicts the measurement system of Fig.5 while loading three objects;
**Fig. 7** depicts the measurement system of Fig.5 while scanning a first object with first cameras;
**Fig. 8** depicts the measurement system of Fig.5 while scanning a first object with second cameras;
**Fig. 9** depicts the measurement system of Fig.5 after the scanning of the first object is complete;
**Fig. 10** depicts the measurement system of Fig.5 while scanning a second object with first cameras;
**Fig. 11** depicts the measurement system of Fig.5 after the scanning of the second object is complete;
**Fig. 12** depicts a second embodiment of a measurement system;
**Figs. 13-15** are charts showing some steps of a loading method performed at a depot;
**Fig. 16** is an example of a service area wherein geographical zones have been defined;
**Fig. 17** is an example of a service area wherein geocoded packages have been assigned to geographical zones;
**Fig. 18 and 19** are examples, wherein neighbouring geographical zones are combined to form PUD rounds;
**Fig. 20** is an example of sequencing a series of stops in the geographical zones for each of the PUD rounds; and
**Fig. 21** depicts a block diagram illustrating an exemplary data processing system that may be used in the system of the invention.

### DETAILED DESCRIPTION OF THE DRAWINGS

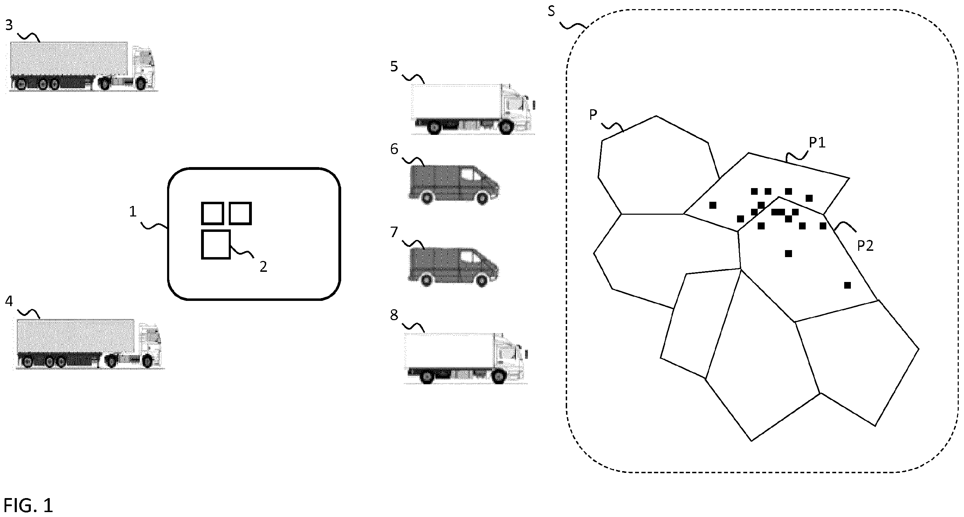

Packages may be loaded in vehicles for line haul or pickup and delivery (PUD), for example. **Fig. 1** is an infrastructural diagram depicting a depot 1 for pickup and delivery of packages 2 in a service area S. Packages 2 to be delivered in the service area S arrive at depot 1 by means of a line haul represented by trucks 3 and 4. Delivery of packages 2 in service area S is conducted by means of delivery vehicles 5-8. Delivery vehicles 5-8 may comprise vans, trucks and other suitable equipment.

Conventionally, service area S is divided into static postcode areas P as shown in **Fig. 1****.** Typically, each of the delivery vehicles 5-8 is assigned one or more postcode areas P for delivery of packages 2. The driver has loaded packages 2 in the delivery vehicle 5-8 in accordance with the known delivery addresses in the postcode areas P such that he can easily access the packages 2 once he arrives at the delivery address. The time spent by delivery vehicles 5-8 on their round depends heavily on the amount of packages 2 to be delivered in the postcode areas of the round.

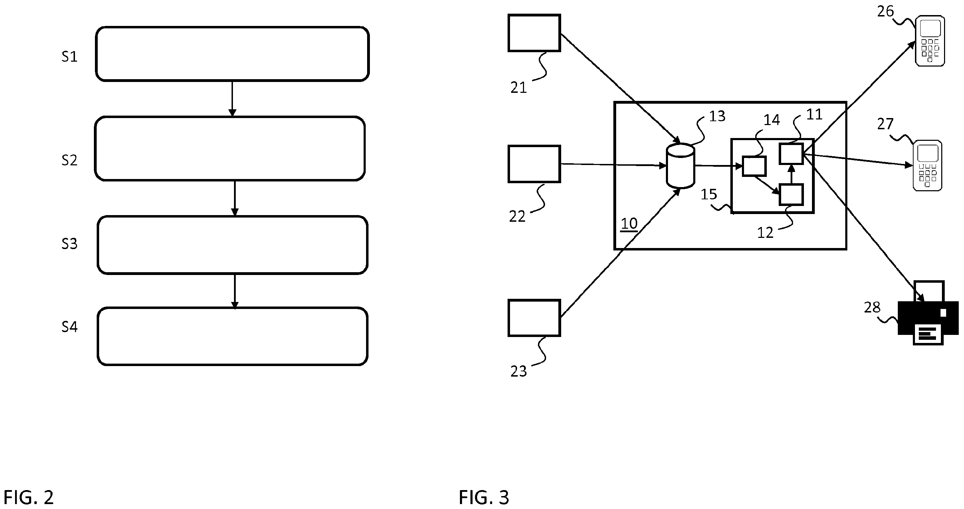

**Fig. 2** shows a flow diagram of an embodiment of the method of facilitating vehicle loading of the invention. A step S1 comprises a processor assigning a plurality of packages to a vehicle. A step S2 comprises a processor receiving a weight and a size of each of the plurality of packages. A step S3 comprises a processor determining loading position identifiers for each of the plurality of packages based on at least the received weight and the received size of each of the plurality of packages while taking into account a load distribution of the plurality of packages in the vehicle. A step S4 comprises a processor using an output interface to output the loading position identifiers. Although step S2 is shown being performed after step S1 in **Fig.2****,** alternatively, steps S1 and S2 may be performed in parallel or step S1 may be performed after step S2.

A system 10 for facilitating vehicle loading comprises a receiver 14, an output interface 11, and a processor 12, see **Fig.3****.** In this embodiment, the receiver 14, the output 11 and the processor 12 are part of a server 15 and the system comprises a single processor and a single receiver. In an alternative embodiment, multiple processors and/or multiple receivers may be used. The processor 12 is configured to assign a plurality of packages to a vehicle and to use the receiver 14 to receive a weight and a size of each of the plurality of packages. The processor 12 is further configured to determine loading position identifiers for each of the plurality of packages based on at least the received weight and the received size of each of the plurality of packages while taking into account a load distribution of the plurality of packages in the vehicle. The processor 12 is also configured to use the output interface 11 to output the loading position identifiers. The output interface 11 may comprise one or more hardware components. The receiver 14 may be combined with a transmitter in a transceiver.

In the embodiment shown in **Fig. 3****,** the processor 12 is configured to use the receiver 14 to receive a weight and a size of one or more of the plurality of packages from a measurement system 21-23, the measurement system 21-23 having measured the weight and the size. In this embodiment, the weights and sizes of packages are stored on a storage facility 13 and are later, when needed, received by the receiver 14. The measurement systems 21-23 may be located at origin depots (where packages are brought after pickup), at destination depots (where packages are loaded in the vehicles for delivery) and/or at any location (e.g. hub) in between.

The server 15 and the storage facility 13 may run a Windows and/or Unix (or Unix-like) operating system, for example. The processor 12 may comprise an Intel or AMD processor, for example. The storage facility 13 may comprise multiple storage components. The storage facility 13 may comprise a solid-state (e.g. RAM or flash), optical and/or magnetic storage means, for example. The output interface 11 may comprise a web server, a display, a printer driver or a printer, for example.

The processor 12 is configured to use the output interface 11 to provide the output to a display of a (mobile) device 26-27 and a printer 28. Customer devices may have access to parts of the system 10 or may receive information originating from system 10. Communications with customers may include pickup orders and requests for delivery status information (e.g. the estimated time of arrival ETA). In this embodiment, service employees (e.g. depot staff and drivers) possess a device 26-27 capable of communicating with system 10. Customer devices and service employee devices may include computer systems, laptops, tablet computer, smart phones, dedicated scanners, etc. A device 26-27 may be integrated in delivery vehicle 5-8.

The information displayed a device 26-27 and the information printed by printer 28 may not only be usable for the person(s) loading the delivery vehicle 5-8, but also for the person(s) unloading the delivery vehicle 5-8. The person(s) unloading the delivery vehicle 5-8 may be provided a list of destinations (e.g. addresses) and for each address the corresponding loading position identifier, for example. If a person loading the delivery vehicle 5-8 decides to deviate from an outputted loading position, he may be able to specify the actual loading position(s) in a memory that is used to provide loading position identifiers to the person(s) unloading the delivery vehicle 5-8.

The processor 12 may be configured to obtain a floor layout of the vehicle from the storage facility 13 and to determine loading position identifiers for each of the plurality of packages based on at least the received weight and the received size of each of the plurality of packages and the floor layout of the vehicle.

The processor 12 may be configured to assign the plurality of packages to the vehicle based on at least the received weight and the received size of each of the plurality of packages while taking into account a load distribution of the plurality of packages in the vehicle.

The processor 12 may be configured to determine a round for the vehicle, the round comprising a sequence of scheduled delivery stops, and to determine, for each of the plurality of packages, a loading position identifier for a package based on at least the received weight and the received size of the package and a scheduled position of the package in the sequence of scheduled delivery stops.

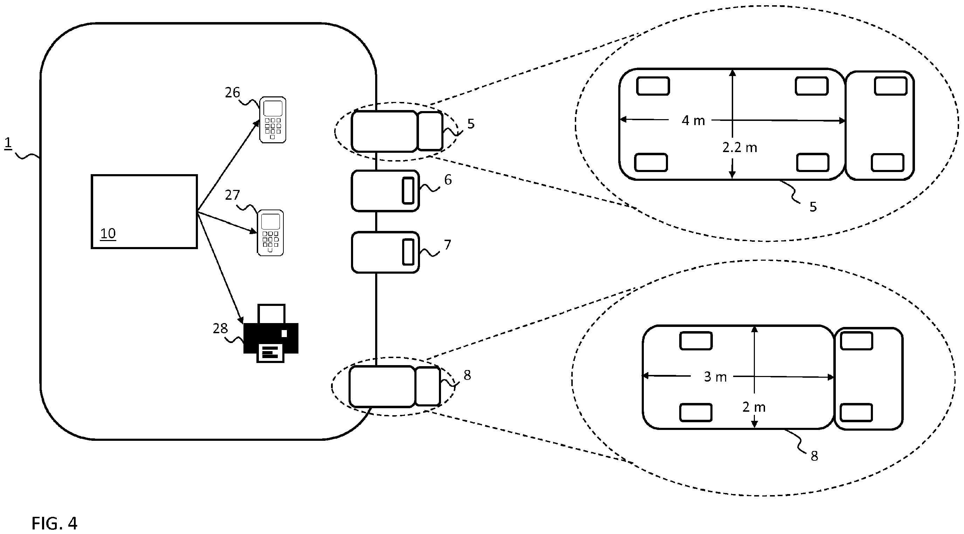

**Fig. 4** shows the system 10 of **Fig.3** being used in a depot 1. Packages 2 have been delivered by trucks 3-4 (see **Fig. 1****)** at the depot 1. Delivery vehicles 5-8 are available to deliver the packages 2 in the service area S (see **Fig. 1****).** Each delivery vehicle 5-8 has been assigned a round R1-R4 in the service area. Each round is identified by a round identifier Rix. The round identifier may be applied to the package 2, for example. In one example, the round identifier is applied to the package 2 in a human-readable format. In another example, the round identifier is applied to the package 2 in a non-human readable format, such as a bar code, a QR code or any other computer readable format. In yet another example, the package is identified by another computer readable code, which can be used to obtain, retrieve or derive the round identifier from an external system, such as system 10.

The rounds R1-R4 are identified in the depot 1. The depot 1 may have a footprint template to identify the rounds. The daily number of rounds may vary. The rounds are independent of the delivery vehicle, i.e. any delivery vehicle 5-8 may drive the delivery round as long as the capacity of the delivery vehicle 5-8 is sufficient to store the packages 2 to be delivered during the round. In one embodiment, space is reserved before leaving the depot 1 for picking up packages 2 or it is made sure that space is available once the delivery vehicle 5-8 arrives at a stop where one or more packages 2 are to be picked up. The sequence of the stops may be planned such that space becomes available during the round to ensure that packages to be picked up can be loaded for delivery at the depot 1.

The packages 2 may be routed to the appropriate delivery vehicle 5-8 on the basis of the obtained round identifier Rix. In one example, depot 1 contains a conveyor belt provided with a scanner configured to obtain round identifier Rix for automatic routing of the packages 2 to the delivery vehicle 5-8 destined for driving the round R1-R4 corresponding to the round identifier.

The rounds R1-R4 may be obtained in a dynamic manner that will be described in more detail below. Accordingly, the round identifier Rix may be a dynamic round identifier used for loading the packages 2.

Especially when a vehicle 5-8 is a truck, the load distribution of the packages in the vehicle is important. In **Fig.4****,** floor layouts are shown for two vehicles 5 and 8 that are trucks. Vehicle 5 is a truck with six wheels and a cargo interior of 4 meters (length) by 2.2 meters (width) by 3 meters (height, not depicted). Vehicle 8 is a truck with four wheels and a cargo interior of 3 meters (length) by 2 meters (width) by 2.5 meters (height, not depicted).

The loading position is determined such that the package is placed to facilitate easy unloading once the delivery vehicle 5-8 arrives at the predetermined stop where the package is to be unloaded and further based on the received weight and the received size of each of the packages assigned to the delivery vehicle 5-8 while taking into account a load distribution of the packages assigned to the vehicle.

A desired load distribution may be considered not to be achieved, for example, if the weight at one side of the truck or at the back of the truck is at least a certain amount higher than the weight in the middle of the truck or if the load might shift during transport (e.g. there is an empty space next to one or more packages and one or more of these packages cannot be sufficiently fastened). The desired load distribution may depend on the type of vehicle and may be determined from a floor layout, for example. The number of wheels and the positions of the wheels on a vehicle may be taken into account.

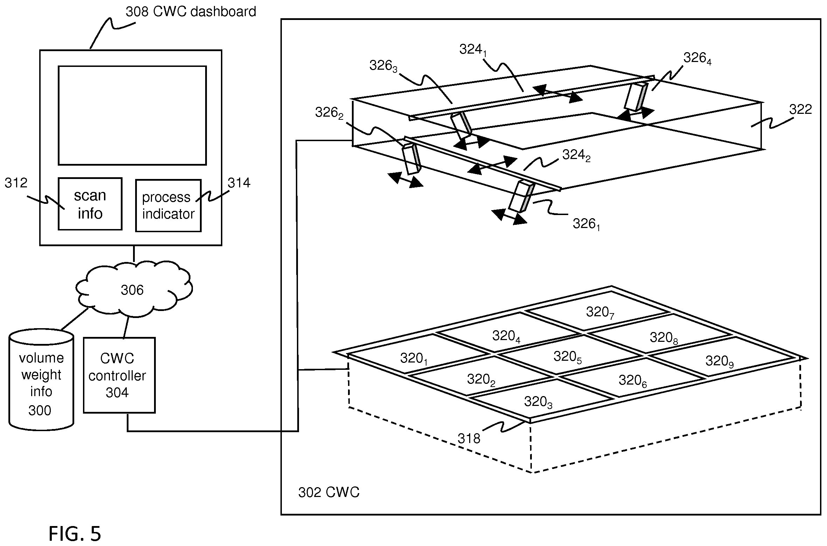

**Figs. 5-11** depict two embodiments of a measurement system that may be used with or in the system of the invention. **Fig. 5** depicts a Check Weight Cube (CWC) **302** for non-conveyables that is optimized for high throughput processing. The CWC **302** comprising a weighing system **318** comprising a plurality of electronic scales **320** and a volume scanning system **322** comprising a number of movable cameras **326.** The scanning system may comprise mounting frames **324** for mounting the movable cameras so that the cameras can be moved to different x,y positions in a plane parallel to the top surface of the scale.

The CWC **302** is connected to a CWC controller **304** for controlling the scanning process and, via network **306,** to a CWC dashboard **308,** e.g. one or more large displays mounted close to the CWC **302,** a display in the forklift truck, a mobile phone or another graphical user interface such as a head-mounted display, e.g. Google glasses. The electronic scales **320** are integrated in the floor of a depot such that the surface of the floor matches the top surface of the scales. This way forklifts can mount and demount packages in a very fast way. Moreover, the plurality of scales (the matrix of scales) under the volume scanning system can be controlled such that one or more of the scales of the plurality of scales forms a scale for packages of a particular size. Hence, the plurality of scales can be configured into different of scales of different sizes. This way scanning processes of different packages can be processed in parallel.

Further, during the scanning process, the CWC dashboard **308** informs a forklift driver about the status of the scanning process using a process indicator **314.** Further it can display scanned information **312,** e.g. weight and volume. Once the scanning process is finished the data may be stored in a database **300.** The volume and weight information is also used for optimizing and increasing the safety of processes within a depot or a hub.

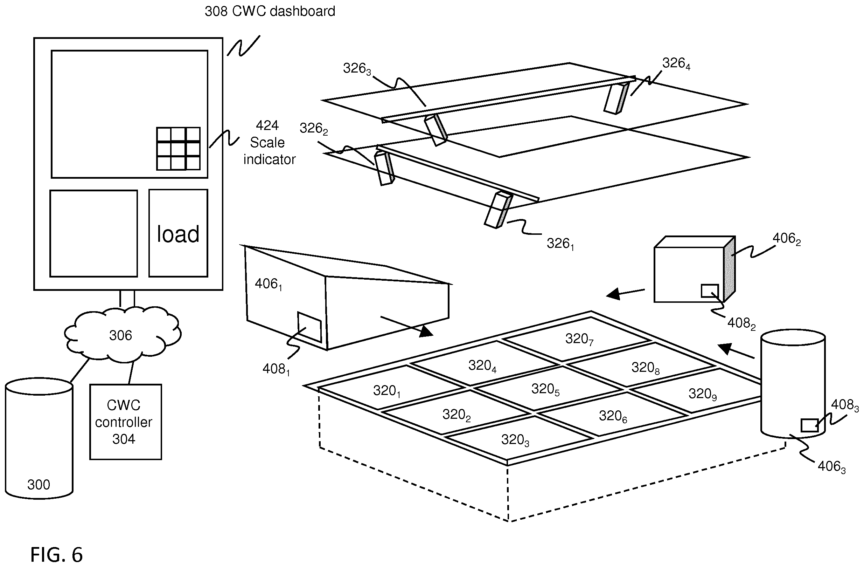

The CWC of **Fig. 5** may be used for high throughput scanning of non-conveyables. This process, which is executed by the CWC controller **304,** is illustrated hereunder with reference to **Figs. 6** to **11****.**

**Fig. 6** depicts a first phase wherein the CWC indicates via the CWC dashboard **308** that packages can be loaded onto the scales. A scale indicator **424** in the dashboards signals a forklift driver which scales are ready for receiving a package. Different packages may be loaded onto different scales of the plurality of scales of the weighing system of the CWC. In that case, the weighing system **318** senses that a first package **406₁** is loaded onto four electronic scales which the CWC controller **304** configures as a first combined scale for weighing the first package. Similarly, a second package **406₂** is loaded on two electronic scales that are configured as a second combined scale for weighing the second package and a third package **406₃** is loaded on a signal electronic scale for weighing the third package.

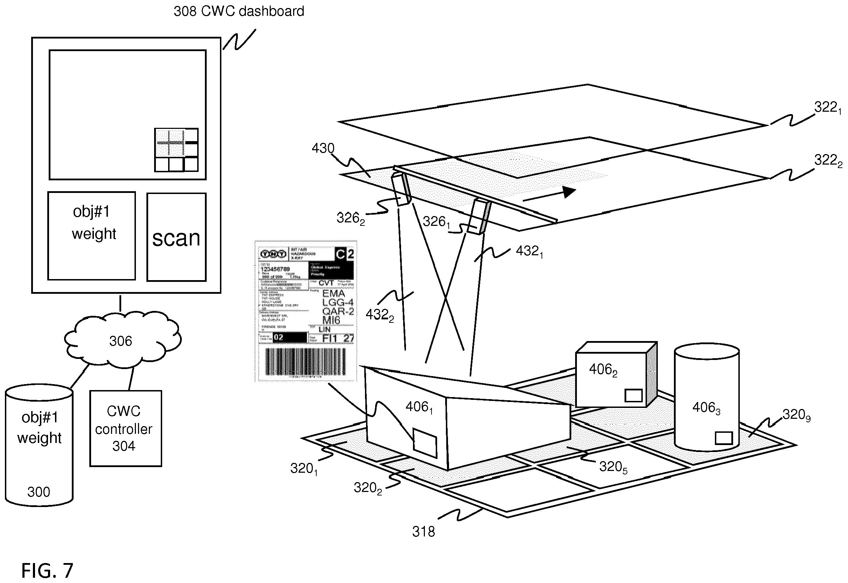

Then, in a second phase as shown in **Fig. 7****,** the weighing and scanning process is started. To that end, the first combined scale weighs the first package and transmits the measured weight to the CWC controller **304** which may display the value onto the dashboard. The scales that are active in the process may be displayed on the CWC dashboard **308.** As the CWC controller **304** knows the position of the scales in the matrix the scanner and uses this information in order to define a scanning area **430,** see **Fig. 7****,** which the volume scanning system uses in order to determine a 3D picture of the first package. This picture includes an ID of the package (e.g. a bar code **408)** which can be analyzed and recognized using well-known image recognition software. The thus determined package ID can be displayed on the CWC dashboard **308** as well.

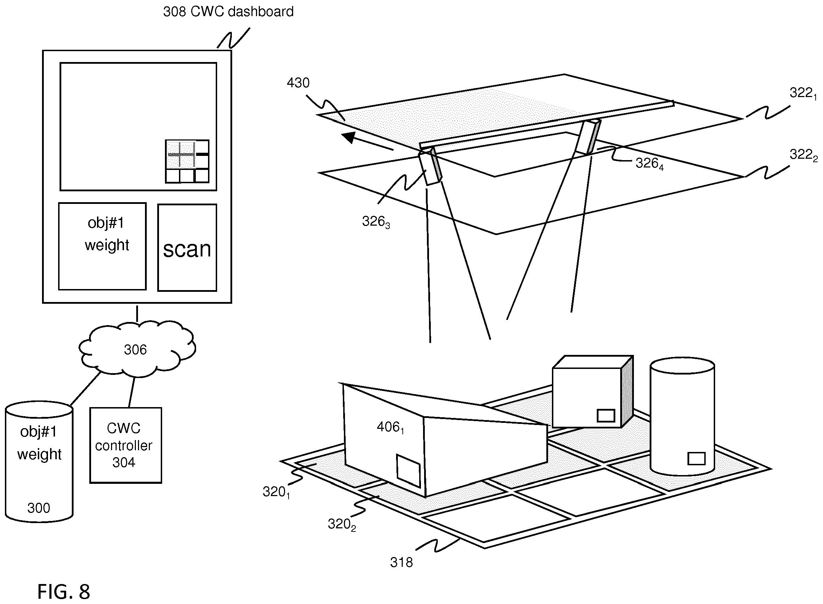

**Fig. 7** depicts cameras **326₁** and **326₂** moving to the right in order to perform a first scan of package **406₁** in scanning area **430** with the help of scanning beams **432₁** and **432₂.** **Fig. 8** depicts cameras **326₃** and **326₄** moving to the back in order to perform a second scan in scanning area **430** of package **406₁.**

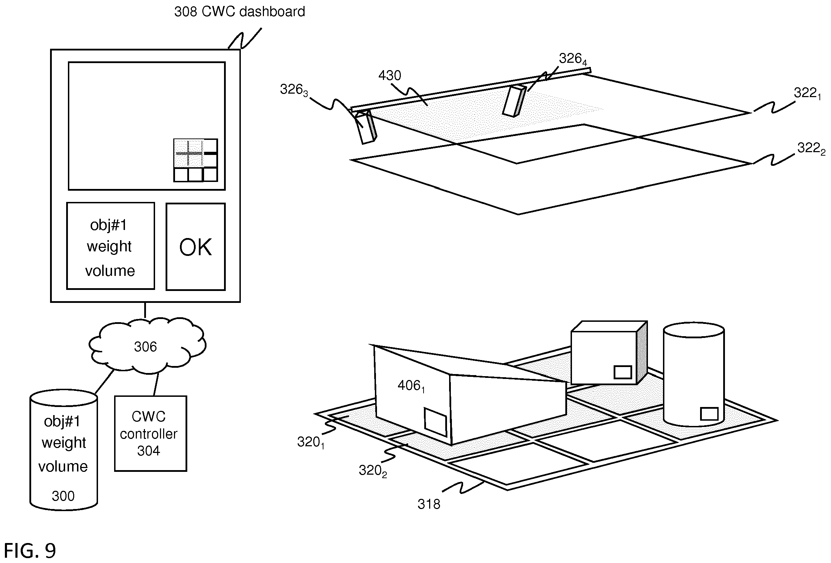

In the third phase, shown in **Fig. 9****,** the CWC controller **304** determines that the volume scanning process was successful and displays the measured volume onto the CWC dashboard **308.** The scanned information, i.e. the package ID, weight and volume is stored in the database **300.**

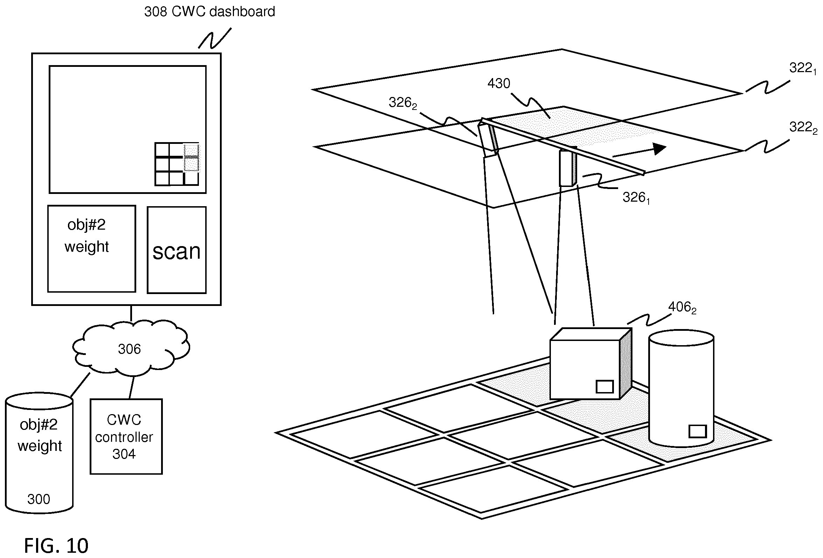

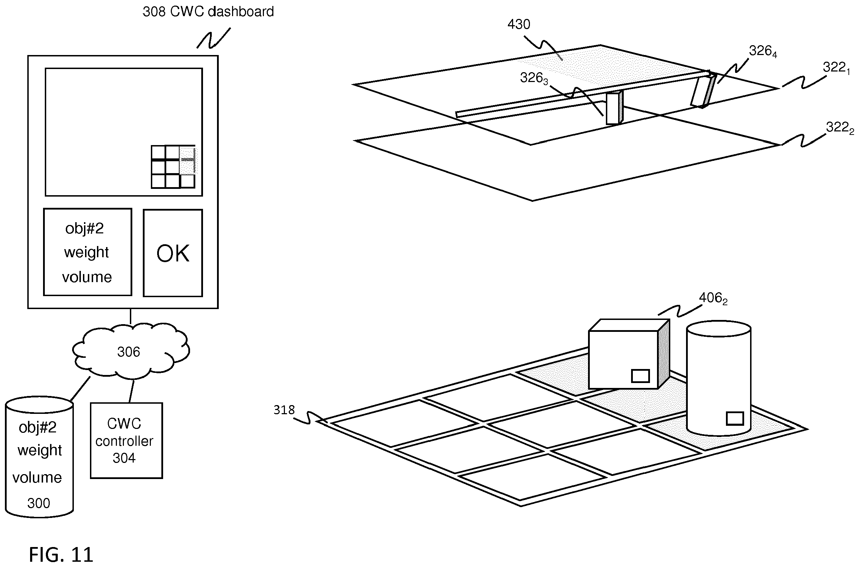

**Fig. 10** shows the second phase being repeated for package **406₂.** **Fig. 11** shows the third phase being repeated for package **406₂** after both scans have been performed in the second phase.

It is noted that the CWC controller **304** can execute the loading, weighing, scanning and unloading process depicted in **Figs.** 6 to 11 for multiple packages in parallel (or at least partly in parallel). For example, during the weighing and scanning process of a first package a second package may be loaded onto scales that are not used for the weighing and scanning process of the first package. Alternatively and/or in addition, during the weighing and scanning process of a first package a third package can be unloaded from the weighing system.

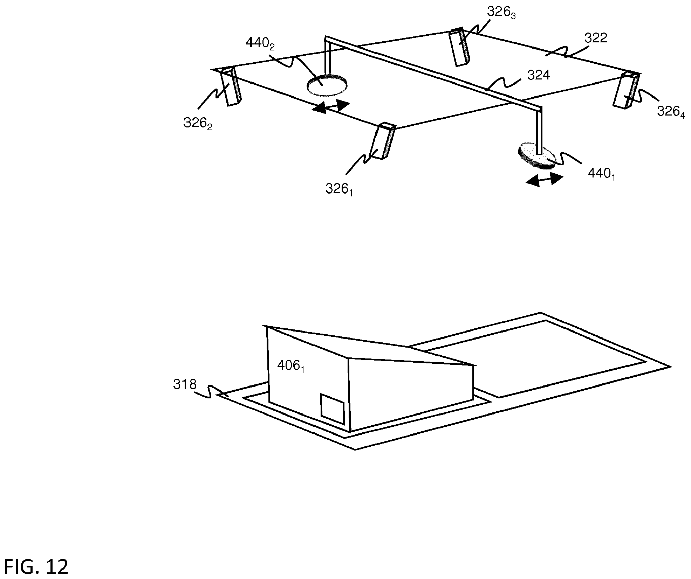

**Fig. 12** depicts a second embodiment of a Check Weight Cube (CWC) **302** for non-conveyables. In this embodiment, the weighing system **318** only comprises two measurement areas. The first package **406₁** is shown placed in the first measurement area. As in the first embodiment, the volume scanning system **322** of the second embodiment comprises four cameras **326₁₋₄,** but in the second embodiment, the cameras are fixed at the edges of the volume scanning system **322** and are not movable. The cameras **326₁₋₄** are used to create a surround view, e.g. 360 degree view, of the first package **406₁.** In the second embodiment, the volume scanning system **322** comprises a single movable frame **324.** On this movable frame **324,** two laser distance measurement devices **440₁₋₂** have been mounted at the ends, i.e. at fixed positions, of the moveable frame **324.** By moving the movable frame **324,** these laser distance measurement devices **440₁₋₂** are used to create a point cloud to represent the external surface of the first package **406₁.** By analyzing this point cloud, the size, e.g. the volume and/or the dimensions, of the package may be determined.

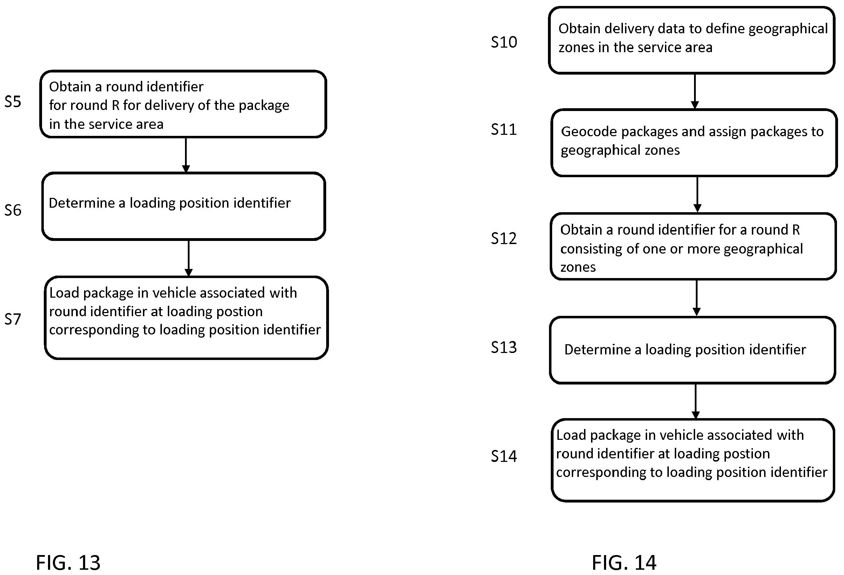

**Figs. 13-15** are illustrative charts showing some steps of the loading method as disclosed herein. The skilled person will appreciate that the sequence of the steps may deviate from the sequence shown in one or more of **Figs. 13-15****.**

**Fig. 13** is a chart indicating some basic steps of a method for loading packages 2.

In step S5, a round identifier Rix is obtained for a round R in service area S for delivery of packages 2 at predetermined stops in that round R. A delivery vehicle 5-8 is assigned to that round.

In step S6, a loading position identifier Lpix is selected for each package 2. The loading position identifier indicates a loading position in the delivery vehicle where the package should be placed. The load position identifier Lpix may be, for example, graphical (e.g. comprising a marking on a floor layout where the package should be placed). Alternatively, the load position identifier may be, for example, textual (e.g. comprising a number or description identifying an area of the vehicle). The loading position identifier is determined such that the package loading position facilitates easy unloading once the delivery vehicle 5-8 arrives at the predetermined stop where the package is to be unloaded and is further based on the received weight and the received size of each of the packages in a certain Round Rix while taking into account a load distribution of the packages assigned to the vehicle performing this Round Rix.

In step S7, the package 2 is loaded in the delivery vehicle 5-8 assigned to the round R using the round identifier Rix at a loading position corresponding to the loading position identifier Lpix.

**Fig. 14** is a more elaborate chart wherein not only the loading position identifiers Lpix are selected dynamically, but also the round identifiers Rix.

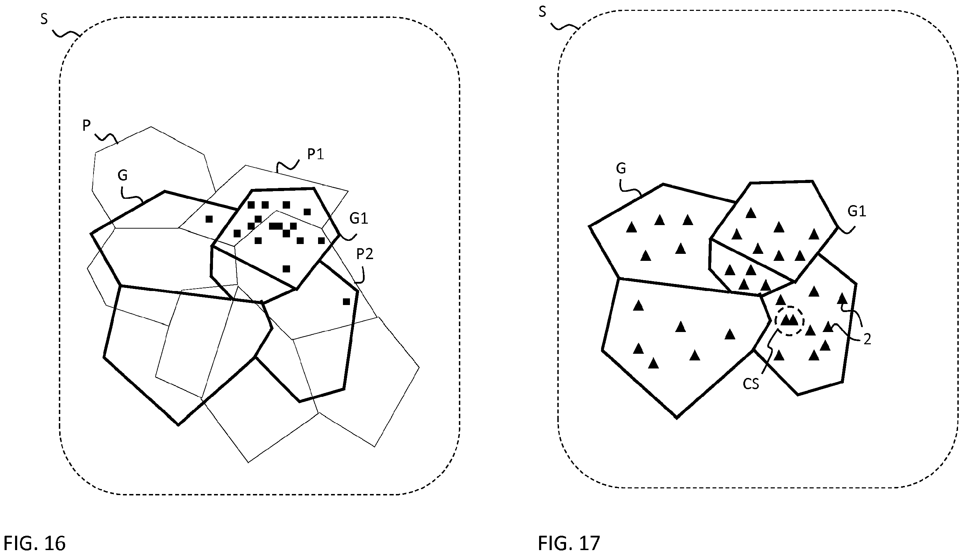

In step S10, previous delivery data are used to define geographical zones in the service area S. **Fig. 16** is an example hereof. The delivery data comprises e.g. the geoposition of each stop of a delivery vehicle 5-8 in the service area S. The stops may be made visible on a digital map. On the digital map, clusters of stops may be identified and geographical zones may be defined. The geographical zone is obtained by drawing a boundary (a polygon) around the cluster, possibly also taking account of geographical details on the map. The delivery data may change and, hence, the definition of the geographical zones may change accordingly.

In step S11, the packages 2 are geocoded and assigned to the geographical zones. **Fig. 17** is an example hereof. When packages 2 to be delivered are registered within system 10, a geocode is assigned to each package immediately if a geocode is not already available for the package (the geocode may e.g. also be provided by the customer). To that end, system 10 comprises a geocoding engine capable of deriving a geocode on the basis of address data of the package. A geocode is a universally unique location and may be expressed as a coordinate, e.g. a GPS coordinate or equivalent. A geocode may be beneficial when the postcodes in a country or region are not sufficiently accurate.

Is step S12, rounds R are defined by combining one or more of the geographical zones. The rounds R may change on a daily basis, e.g. the number of rounds for the service area S may vary between days. A round identifier Rix is assigned to each round R for every day.

Steps S13 and S14 correspond to steps S6 and S7 in **Fig. 13****.**

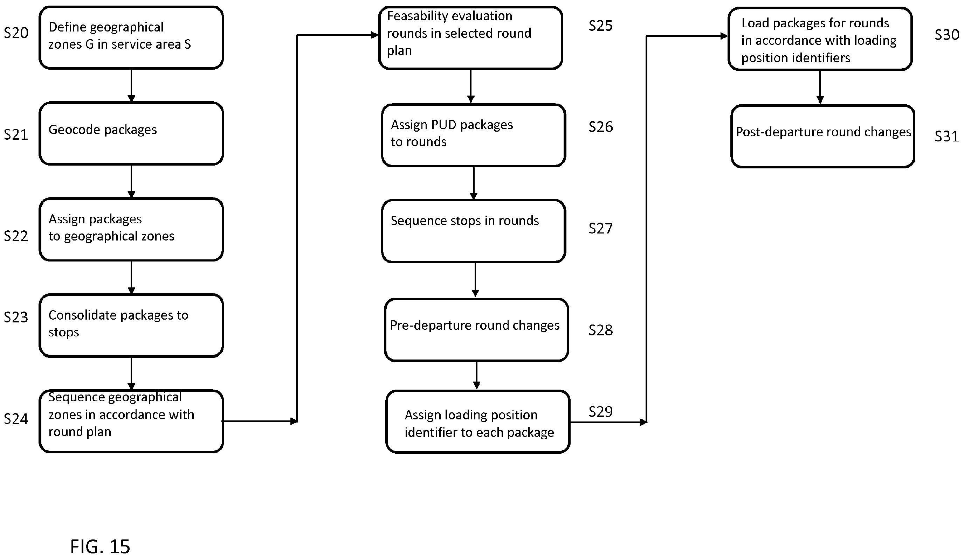

**Fig. 15** is a chart indicating some steps of a yet more elaborate sorting and loading method and system as disclosed herein. Steps of the method will be explained below in more detail.

The distribution of stops for delivery of packages 2 within postcode areas P cannot be accounted for in the pickup and delivery rounds R. For example, as shown in **Fig. 1** by the black squares, many stops are made daily for delivering of packages 2 on both sides of the borderline between adjacent postcode areas P1, P2, whereas these postcode areas P1, P2 are assigned to different rounds and driven by different vehicles 5-8.

In this embodiment, the definition of geographical zones is delivery data driven in order to optimize the use of delivery resources. This is step S20 in **Fig. 15****.** Delivery data may be generated by or obtained from devices used during delivery rounds in the service area S.

In one embodiment, delivery vehicles 5-8 provide delivery data when driving delivery rounds. Delivery data is received by the system 10. The delivery data comprises e.g. the geo-position of each delivery stop of a delivery vehicle 5-8. The stops may be made visible on a digital map. On the digital map, clusters of stops may be identified and geographical zones may be defined. The geographical zone is obtained by drawing a boundary (a polygon) around the cluster, possibly also taking account of geographical details on the map.

**Fig. 16** shows the service area S of **Fig. 1** wherein geographical zones G, indicated by the bold lines, are defined on the basis of received PUD data. As illustrated, delivery stops for packages (black squares) originally assigned to postcode areas P1 and P2 are now clustered within a single geographical zone G1. In such a manner, adjacent geographical zones G can be defined and the service area S can be divided into geographical zones G. A geographical zone G is a geographical area defined as a sequence of geo-points that constitutes a polygon. Geographical zones G are adjacent zones and, preferably, abutting zones.

Other data that may be comprised in or derived from the delivery data or be calculated for the geographical zones G, such as one or more time values associated with the total duration of pickup and delivery of packages in a geographical zone G. A tool may e.g. be used to calculate the time duration associated with the number of stops in a geographical zone G. The time duration may involve multiple time values, e.g. a stop time and a drive time. Drive time is the time related to driving from the boundary of the geographical zone to the first stop in a cluster, the driving time in between stops and the drive time from the last stop to exit of the geographical zone. The stop time is the time during which a delivery vehicle 5-8 halts to deliver one or more packages. Accordingly, an aggregated time value for servicing the geographical zone may be associated with each geographical zone G.

When packages 2 to be delivered or picked up are registered within system 10, a geocode is assigned to each package immediately if a geocode is not already available for the package (the geocode may e.g. also be provided by the customer), step S21 in **Fig. 15****.** To that end, system 10 comprises a geocoding engine capable of deriving a geocode on the basis of address data of the package or the pickup address. A geocode is a universally unique location and may be expressed as a coordinate, e.g. a GPS coordinate or equivalent.

The geocode may be too accurate for the PUD purpose, such that approximations of the geocode may be used. In other words, tiles for a delivery address in the service area S may be defined wherein coordinates falling within the tile are treated as being one and the same. Certain customers may have pre-assigned tiles.

In more detail, geocoding is performed as follows. For a certain delivery order, it is first checked if a geocode has already been provided for or assigned to the package 2, e.g. by the customer. If no geocode has been assigned, a call is made to the geocoding engine containing all relevant data to request a geocode. If the call returns a geocode with a sufficient match (above a threshold value, e.g. 80%), the geocode is assigned automatically. If the call returns a geocode with an insufficient match, than manual or manually assisted geocoding (possibly assisted by geocoding services or software) may be performed.

Every geocode assigned to a package 2 (i.e. for pick up a location where the package 2 can be collected) fits uniquely in one geographical zone. A geocode is also assigned to an address where a package 2 needs to be picked up. Accordingly, each of the plurality of the packages 2 is assigned to one geographical zone based on the geocode associated with each of the plurality of packages 2. Various algorithms may be applied to calculate in which geographical zone G a package 2 should be located. One example is the Ray Shooting Algorithm.

**Fig. 17** is a schematical illustration of geographical zones in service area S, having some geocoded packages 2, indicated by black triangles, assigned. Assigning geocoded packages to geographical zones G is shown as step S22 in **Fig. 15****.**

After geocoding of packages 2 and assigning the packages 2 to their corresponding geographical zones G, a next step S23 may be to consolidate deliveries (and pickups) of packages 2 into stops on the basis of some defined criterion. This may be advantageous when at least one of location, service and time windows allows a single stop to be made for multiple packages instead of having to visit the location multiple times. A stop may be split into activities, such as delivery and pickup.

In system 10, a proximity measure may be defined as a criterion whether or not packages 2 may be consolidated to a single stop. A default range may be determined (e.g. 10 meters) or a number of tiles, e.g. 1 tile or 2 tiles. If packages 2 are to be delivered, for example, within a set range, a single stop is defined for the delivery of the packages. Also, an amount of time can be defined that is allowed between the delivery and collection windows to allow consolidating stops to facilitate that pickups and deliveries can be consolidated even when there is no overlap of the delivery and pickup time windows. Still further, it may be defined whether packages associated with different services (e.g. regular and premium) can be combined.

In **Fig. 17****,** based on the proximity measure, packages 2 within the dashed circle are consolidated into a single stop CS. Another example includes the case wherein a package under the regular service is delivered together with a package enjoying a premium service.

In order to verify which packages 2 meet the proximity criterion to be consolidated, the system 10 randomly chooses packages and determines packages in range to prevent chaining. In addition, packages should be part of the same geographical zone in order to be candidates for consolidation. If the service criterion cannot be met, only candidates for the same service may be considered. Furthermore, time windows are verified. If packages are consolidated in a stop that have different windows (e.g. a 12:30 premium and a 13:00 collection), than the start time of the stop is the earliest time.

Several examples of single stops for pickup and/or delivery of packages may be envisaged. It could be that a single building houses ten customers with all different addresses, it could be that a single building houses ten companies with all the same address, it could be that a building houses one company with one address and ten departments, etc.

For each of the stops CS, a stop time may be known or derived. Stop time may be calculated based on the number of deliveries and pickups per stop and values set for delivery and pickup. If the time value for a delivery is set to 4 minutes and for a pick up to 5 minutes, a consolidated stop with 3 deliveries and 2 pickups may have assigned a stop time of 22 minutes.

The geographical zones G constitute the basic constructs of the rounds. The geographical zones G are longer-term constructs based on a statistically significant amount of information (e.g. the previously received delivery data).

In one aspect of the present disclosure, delivery rounds are formed by combinations of geographical zones G, step S24 in **Fig. 15****.** The geographical zones G assist to build the footprint of PUD rounds. The geographical zones G are combined and the time values are used to evaluate whether sufficient time is available to service the geographical zones G.

The skilled person will understand that many factors may influence the actual delivery of packages 2, such that a certain PUD of combined geographical zones round may not always be efficient. Factors include, seasonal factors like weather, daily factors, like more deliveries on Mondays and more returns (i.e. pickups) on Tuesdays, holidays, commemoration days, vacation periods etc. In order to accommodate for these factors, system 10 may store various round plans.

A round plan defines the assignment of geographical zones to a certain round. The round plan provides the link between the amount of rounds to be used for depot 2 and which geographical zones are linked to each round of the round plan.

A first round plan may comprise many rounds. Another round plan may define rounds comprising different geographical zones than the first round plan. The number of rounds (and, hence, the number of delivery vehicles 5-8 required) may differ between various round plans. E.g., in busy weeks, such as the weeks before Christmas, a round plan may be selected wherein many rounds are defined and the number of geographical zones assigned to each of the rounds is small. In other weeks or days, a round plan is selected requiring fewer delivery vehicles 5-8. Geographical zone G1 may be part of a first PUD round in one round plan and be part of a second, different, PUD round in another round plan.

Round plans may comprise multiple layers. Layers may relate to premium packages, freight, delivery only, pick up only, etc. A geographical zone may not be part of more than one round for a particular layer.

The type of delivery vehicle 5-8 (e.g. van or truck) may also vary between different round plans.

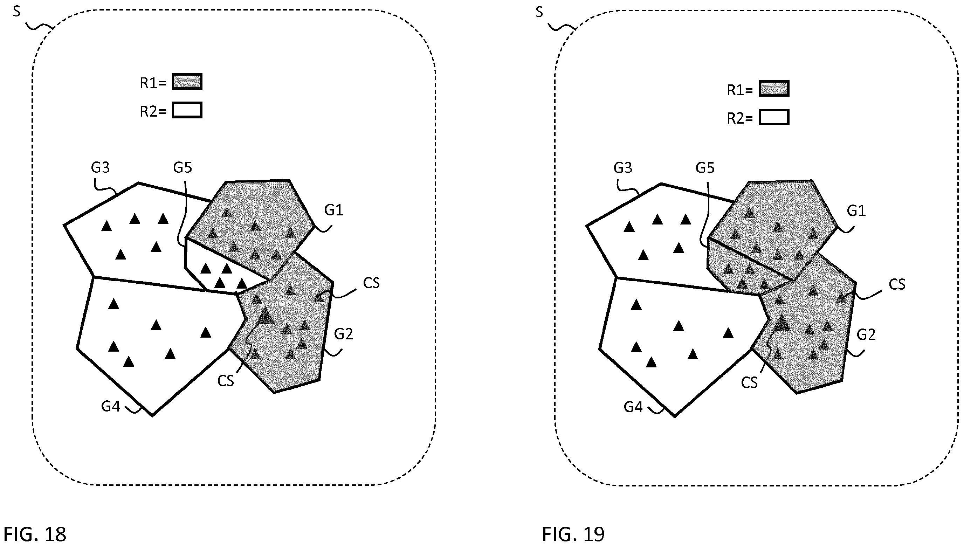

Once a round plan has been selected, it is known which geographical zones G are assigned to which delivery round. This assignment was based on historical information. **Fig. 18** shows and example of two rounds R1, R2, wherein geographical zones G1 and G2 constitute round R1 and geographical zones G3, G4 and G5 form round R2. In **Fig. 18****,** all black triangles refer to stops CS.

The step of consolidating stops provides the actual stops for each of the geographical zones G, and, accordingly, for each of the delivery rounds R to be driven by the delivery vehicles 5-8. As a next step, step S25 in **Fig. 15****,** it is checked whether the round plan is feasible based on the actual available data of the packages 2 to be delivered.

For the feasibility evaluation, the following information may need to be obtained per geographical zone, per round (the sum of the geographical zones), and/or per round plan (the sum of the rounds): the historical number of pickups, the historical number of deliveries, the actual number of pickups, the actual number of deliveries, the total stop time based on historical data, the total driving time based on historical data, the total stem time (the amount of time for a driver to get to his first stop) based on historical data and the average stop and driving time per pickup and per delivery based on historical data.

The output of the feasibility evaluation for the geographical zones includes one or more of the expected time (the sum of the historical expected driving, stop and stem time), the actual deliveries (the number of deliveries available for the geographical zone in the data with a due date that requires them to plan to deliver), and the actual pickups (the number of pickups available for the geographic zone in the data with a due date that requires them to plan to collect).

For the round, the output of the evaluation comprises at least one of the number of expected pickups (sum of all historical pickups for the assigned geographical zones to the Round), the number of expected deliveries (sum of all historical deliveries for the assigned geographical zones to the round), the expected time (sum of the expected time per geographical zone), the available white space (time), the working time of the round (from the round plan) minus the expected time of the round), exceeding capacity (negative available white space), actual deliveries (sum of actual deliveries per geographical zone), and actual pickups (sum of actual pickups per geographical zone).

For the round plan, the evaluation may yield one or more of the following: expected Time (sum of the expected time per round), number of rounds (count of the number of rounds), working time (sum of the available working time per round), available white space (working time minus expected time (if positive)), exceeding available time (working time minus expected time (if negative)), number of rounds too heavy (count of the number of Rounds that have the constraint 'too much weight'), number of rounds too much volume (count of the number of rounds that have the constraint 'too much volume'), number of rounds too much expected time (count of the number of rounds that have the constraint 'too much expected time'), number of rounds not wise (count of the number of rounds that have the constraint 'not wise' (this is the result of a 'common sense' parameter and is more used as a support indication than an as a hard constraint; it relates to an indication), expected pickups (sum of all expected pickups per round), expected ad hoc pickups (sum of all expected pickups per round; this is a figure used in the planning overview to provide an indication of the historical figure of ad hoc collections for the geographical area; this figure is based on experience and data and as such not a required variable in the calculations), expected deliveries (sum of all expected deliveries per round), actual deliveries (sum of actual deliveries per round), and actual pickups (sum of actual pickups per round).

It should be noted that the output of the feasibility evaluation may contain more results derived from one or more of the output results mentioned above.
As mentioned above, one or more constraints may be used to evaluate the feasibility of the round plan. These constraints include: too much volume (sum of volume (actual or contractual if actual not available) per stop assigned to the round (via geographical zones) exceeds the allowed volume of the round), too much weight (sum of weight (actual or contractual if actual not available) per stop assigned to the round (via geographical zone) exceeds the allowed weight of the round), too much expected time (sum of the expected time on round exceeds the available working time (available white space is negative), and too late start (check if there are premium deliveries on the round that are expected to deliver earlier than the start time of round). Furthermore, these constraints may include a suitable load (e.g. weight) distribution being achieved in each vehicle. Whether this constraint is met may be determined using the received weight and received volume of the packages 2.

Using the output, an optimization step may be performed using mixed linear programming in order to e.g. minimize the exceed capacity and the available white space while keeping the same amount of rounds R. The optimization uses as constraints that the volume and weight may not be exceeded and may further use as constraint that a suitable load (e.g. weight) distribution is achieved in each vehicle or in certain vehicles. Geographical zones G may e.g. be moved from one round R2 to another round R1. This is indicated in **Fig. 19****.** It should be noted that geographical zones G may be indicated as fixed or locked, indicating that transfer to another round is forbidden. A fixed geographical zone is a zone that cannot be transferred due to actual geographical circumstances (such as a river having bridges separated from each other for crossing the river). A locked geographical zone may be unlocked. Furthermore, geographical zones G should always be adjacent to each other to avoid islands being formed in a round.

For the selected round plan, the number of rounds R and the total expected time is known. The optimization yields a plan that has the same amount of rounds, does not violate the applicable constraints, minimizes the exceeding capacity and balances the rounds R to obtain an available white space (a time value indicating the difference between the available working time on a round and the actual used time for deliveries and known pickups). The white space can be used for ad hoc pickups.

For example, the selected round plan may contain three rounds R:
R1: Working Time: 10:00, Expected Time: 08:00, White Space 02:00, Exceeding Capacity: 00:00
R2: Working Time: 10:00, Expected Time: 10:00, White Space 00:00, Exceeding Capacity: 00:00
R3: Working Time: 10:00, Expected Time: 11:30, White Space 00:00, Exceeding Capacity: 01:30

Based on this information it would be logical that geographical zones G would shift from R3 to R1.

Two cases may be considered. In the first case, the geographical zones G from R3 and R1 are adjacent and the optimizer would consider moving geographical zones from R3 to R1 to balance both plans to minimize the exceeding capacity.

In the second case, the geographical zones from R3 are not adjacent to R1, but R2 is adjacent to both. Based on the described goal value the optimizer would then consider it, if feasible, to shift flexible (i.e. not fixed or locked) geographic zones from R2 to R1 to create space to move geographical zones from R3 to R2 to minimize the exceeding capacity.

Various round plans may be evaluated in this manner. Based on the evaluated round plans or the result of the balancing of the round plans, the preferred round plan for the coming day is selected. The preferred round plan to select is the plan with the lowest number of rounds without constraints against weight, volume and excessive working time per round.

Based on the selected round plan, the geocode locations and corresponding geographical zones G and the consolidated stops, the packages 2 (both deliveries and known pickups) are assigned automatically to the correct round R, step S26 in **Fig. 15****.** From the assignment, the following information becomes available: number of stops per round, number of deliveries/pickups per round, total volume per round (including constraints), total weight per round (including constraints) and the total number of packages per round.

In the assignment of packages 2 to the rounds R, it may be checked whether the round plan contains rounds marked as pickup only, delivery only, freight or premium. If there are premium rounds in the selected round plan, then stops CS containing premium deliveries/pickups are assigned to these rounds based on the link with the geographical zone G. If there are freight rounds in the selected tactical profile, then stops CA are assigned that are marked as Heavy to these rounds based on the link with the geographical zone. If there are delivery only rounds in the selected round plan, then only deliveries should be linked to these rounds based on the geographical zones. If there are pickup only rounds in the selected round plan, then only collections should be linked to these rounds based on the geographical zones. If there are no premium/freight rounds in the selected round plan, then the stops will be assigned based on the link with geographical zone and the round.

Another step of the method may include the calculation of distances between geocoded locations or stops. The calculation may be performed as soon as a geocoded location becomes known or later, e.g. when stops are assigned to a round.

One aspect of the disclosure involves the sequencing of the stops of a round, i.e. the determination of the optimal order of the stops using optimization, step S27 in **Fig. 15****.** One example of an optimization algorithm involves a path optimization algorithm, such as a (very) large-scale neighbor-search algorithm. The goal of the algorithm is to find a sequence of stops in a round with the least distance and time while respecting constraints. Constraints may be divided into soft and hard constraints. Soft constraints involve respecting pickup and delivery time windows as much as possible. A hard constraint is the saving of sufficient volume for pickups. Achieving a suitable load (e.g. weight) distribution in each vehicle may also be a hard constraint.

When the different rounds R have their stops assigned based on the selected round plan, the path optimization algorithm is started. During each iteration, the basic steps of the algorithm include:
I. From the set of all (planned) stops, a subset is selected. This selection is partially random, but also depends on how long ago a stop has not been iterated. These stops will be re-planned in this iteration. These stops are called the candidates.
II. The candidates are planned in various ways (different routes, different sequences). This generates new sets of routes in the round.
III. For each set of routes it is determined whether this is an improvement compared to the initial solution (measured by the optimization goal). Improved sets are kept and used as input for a new iteration. If an improvement could not be found the set is discarded.

One run may comprise many (e.g. thousands) of these iterations.

It may happen that at step III no improvement is found. The changes are then discarded. This is where the randomness at step I plays a role. Due to the (partial) randomness the same set of candidates will not be selected again. After step III it can also occur that the optimizer does not discard a worse solution. This worse solution might be worse on the short term, but after a few more iterations might actually improve again and become better than the initial solution. This strategy is used to prevent that the optimizer gets stuck in a local optimum. It should be noted that this intermediate result may not be accepted as a final solution of the optimizer. The result that is found after the entire optimization will never be worse than any intermediate solution.

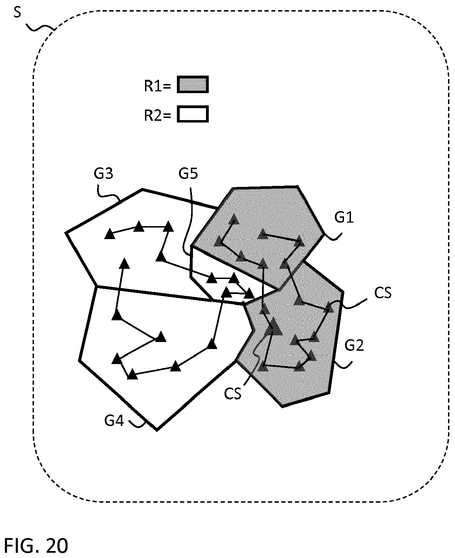

**Fig. 20** illustrates an example of sequencing of rounds R1, R2 for some stops CS.

After selecting the round plan and sequencing the round it is known if there are rounds with under- or excessive capacity or constraints on delivery/collection time windows.

Several changes may be made to the rounds, step S28 in **Fig. 15****,** prior to departure of the delivery vehicle 5-8 from the depot 1.

To improve the rounds, stops CS may be moved from one round to another or complete geographical zones G may be moved to another round prior to departure of the PUD vehicle 5-8 from the depot 1. This may trigger one or more of the following steps:
(1) Calculate distance matrix on the new round;
(2) Start sequencing of stops of the new round;
(3) Start sequencing of stop of the old round.

Only rounds that are adjacent to the original round of the selected stop are candidates and that have the same start location.

As an alternative for or in addition to moving stops, complete geographical zones may be still be moved from one round to another. For moving of geographical zones from one round to another, it is desired that the new round contains a geographical zone that is adjacent to the geographical zone to be moved and that the new round has the same start location as the original round. Furthermore, the new round must belong to the same layer as the original round.

During one of the above steps, e.g. during step S26 before the geographical zone is reassigned to another round, the round identifier Rix may already be assigned to the package 2. The round identifier may also be assigned later. The round identifier Rix signals the round R applicable to the package 2 and, hence, determines a delivery vehicle 5-8 associated with that round R in which the package 2 should be loaded.

In step S29, the loading position identifier Lipx is assigned to each of the packages.

Assigning the loading position is done dynamically as opposed to the prior art wherein loading positions are not assigned to packages. After assigning the load position identifier Lipx the round identifier and loading position identifier may be printed on a label using a printer 28 (see **Fig. 4****)** and the label may be applied to the package.

For every delivery vehicle 5-8 it needs to be defined whether it has cages and, if applicable, how many cages it has an whether it has special loading areas for letters and dangerous packages. Based on the planned deliveries on a round R, the total planned load can be calculated in volume. Based on this, it can be calculated the average volume per loading area/cage and subsequently assign the packages in order of sequence. This applies mainly to vans.

For trucks, there is more flexibility in loading packages and load (e.g. weight) distribution is more important. The loading position is determined such that the package loading position facilitates easy unloading once the delivery vehicle 5-8 arrives at the predetermined stop where the package is to be unloaded and is further based on the received weight and the received size of each of the packages in round R while taking into account a load distribution of the packages assigned to the vehicle performing this round R. This determination may be made, for example, by using linear programming to minimize a driving time and/or driving distance in which the desired load distribution and the stops are used as constraints.

A desired load distribution may be considered not to be achieved, for example, if the weight at one side of the truck or at the back of the truck is at least a certain amount higher than the weight in the middle of the truck or if the load might shift during transport (e.g. there is an empty space next to one or more packages and one or more of these packages cannot be sufficiently fastened). The desired load distribution may depend on the type of vehicle and may be determined from a floor layout, for example. The number of wheels and the positions of the wheels on a vehicle may be taken into account.
At this moment in the sorting and loading process (round plan selected, round sequenced, load position assigned) the labels for rounds R may printed on the printer 28 to enable unloading of the line haul trucks 3 and 4 and start sorting. Sorting and loading is shown as step S30 in **Fig. 15****.**

During the day, post-departure changes occur as shown in step S31, e.g. as a result of customer requests received for ad hoc pickups by the system 10.

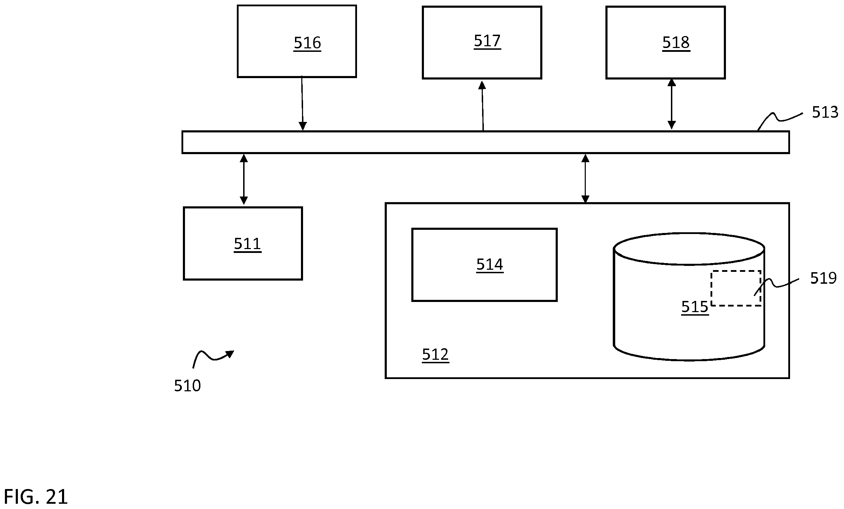

**Fig. 21** depicts a block diagram illustrating an exemplary data processing system that may perform the methods as described with reference to **Figs. 3** **and** **13****-15.**

Computer system 510 may include at least one processor 511 coupled to memory elements 512 through a system bus 513. As such, the computer system 510 may store program code within memory elements 512. Further, processor 511 may execute the program code accessed from memory elements 12 via system bus 513. In one aspect, computer system 510 may be implemented as a computer that is suitable for storing and/or executing program code. It should be appreciated, however, that computer system 510 may be implemented in the form of any system including a processor and memory that is capable of performing the functions described within this specification, in general referred to as data processing.

Memory elements 512 may include one or more physical memory devices such as, for example, local memory 514 and one or more bulk storage devices 515. Local memory may refer to random access memory or other non-persistent memory device(s) generally used during actual execution of the program code. A bulk storage device 515 may be implemented as a hard drive or other persistent data storage device. The computer system 510 may also include one or more cache memories (not shown) that provide temporary storage of at least some program code in order to reduce the number of times program code must be retrieved from bulk storage device 515 during execution.

Input/output (I/O) devices depicted as input device 516 and output device 517 optionally can be coupled to the computer system 510. Examples of input devices may include, but are not limited to, for example, a keyboard, a pointing device such as a mouse, a touchscreen, or the like. Examples of output device may include, but are not limited to, for example, a monitor or display, speakers, or the like. Input device 516 and/or output device 517 may be coupled to computer system 510 either directly or through intervening I/O controllers. A network adapter 518 may also be coupled to computer system 510 to enable it to become coupled to other systems, computer systems, remote network devices, and/or remote storage devices through intervening private or public networks. The network adapter 518 may comprise a data receiver for receiving data that is transmitted by said systems, devices and/or networks to the computer system 510 and a data transmitter for transmitting data to said systems, devices and/or networks. Modems, cable modems, and Ethernet cards are examples of different types of network adapters that may be used with computer system 510.

As pictured in **Fig. 21****,** memory elements 512 may store an application 519. It should be appreciated that computer system 510 may further execute an operating system (not shown) that can facilitate execution of the application. Applications, being implemented in the form of executable program code, can be executed by computer system 510, e.g., by processor 511. Responsive to executing the application 519, the computer system 510 may be configured to perform one or more operation as disclosed in the present application in further detail.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A method of facilitating vehicle loading, comprising the steps of:
- a processor assigning a plurality of packages to a vehicle;
- a processor receiving a weight and a size of each of said plurality of packages;
- a processor determining loading position identifiers for each of said plurality of packages based on at least said received weight and said received size of each of said plurality of packages while taking into account a load distribution of said plurality of packages in said vehicle; and
- a processor using an output interface to output said loading position identifiers.

2. A method as claimed in claim 1, wherein the step of a processor receiving a weight and a size of each of said plurality of packages comprises said processor receiving a weight and a size of one or more of said plurality of packages from a measurement system, said measurement system having measured said weight and said size.

3. A method as claimed in claim 1 or 2, wherein the step of a processor using an output interface to output said loading position identifiers comprises said processor using said output interface to provide said output to a display and/or a printer.

4. A method as claimed in any one of the preceding claims, further comprising the step of obtaining a floor layout of said vehicle from a storage facility, wherein the step of a processor determining loading position identifiers for each of said plurality of packages comprises determining loading position identifiers for each of said plurality of packages based on at least said received weight and said received size of each of said plurality of packages and said floor layout of said vehicle.

5. A method as claimed in any one of the preceding claims, wherein the step of a processor assigning a plurality of packages to a vehicle comprises assigning a plurality of packages to a vehicle based on at least said received weight and said received size of each of said plurality of packages while taking into account a load distribution of said plurality of packages in said vehicle.

6. A method as claimed in any one of the preceding claims, further comprising the step of determining a round for said vehicle, said round comprising a sequence of scheduled delivery stops, wherein the step of a processor determining loading position identifiers for each of said plurality of packages comprises said processor determining a loading position identifier for a package based on at least said received weight and said received size of said package and a scheduled position of said package in said sequence of scheduled delivery stops.

7. A computer program or suite of computer programs comprising at least one software code portion or a computer program product storing at least one software code portion, the software code portion, when run on a computer system, being configured to execute one or more steps of the method according to one or more of the claims 1-6.

8. A system for facilitating vehicle loading, comprising:
at least one receiver;
an output interface; and
at least one processor configured to assign a plurality of packages to a vehicle, to use said at least one receiver to receive a weight and a size of each of said plurality of packages, to determine loading position identifiers for each of said plurality of packages based on at least said received weight and said received size of each of said plurality of packages while taking into account a load distribution of said plurality of packages in said vehicle, and to use said output interface to output said loading position identifiers.

9. A system as claimed in claim 8, wherein said at least one processor is configured to use said at least one receiver to receive a weight and a size of one or more of said plurality of packages from a measurement system, said measurement system having measured said weight and said size.

10. A system as claimed in claim 8 or 9, wherein said at least one processor is configured to use said output interface to provide said output to a display and/or a printer.

11. A system as claimed in any one of the preceding claims, wherein said at least one processor is configured to obtain a floor layout of said vehicle from a storage facility and to determine loading position identifiers for each of said plurality of packages based on at least said received weight and said received size of each of said plurality of packages and said floor layout of said vehicle.

12. A system as claimed in any one of the preceding claims, wherein said at least one processor is configured to assign said plurality of packages to said vehicle based on at least said received weight and said received size of each of said plurality of packages while taking into account a load distribution of said plurality of packages in said vehicle.

13. A system as claimed in any one of the preceding claims, wherein said at least one processor is configured to determine a round for said vehicle, said round comprising a sequence of scheduled delivery stops, and to determine, for each of said plurality of packages, a loading position identifier for a package based on at least said received weight and said received size of said package and a scheduled position of said package in said sequence of scheduled delivery stops.
